# EUROPÄISCHE PATENTSCHRIFT

(11) **EP 3 549 814 B1**
(45) Veröffentlichungstag und Bekanntmachung des Hinweises auf die Patenterteilung: **29.11.2023**
(21) Anmeldenummer: 19162481.6
(22) Anmeldetag: 13.03.2019
(51) Int. Cl.: B60L 53/63, B60L 53/66, B60L 53/67, H02J 3/00, H02J 7/02, H02J 3/26, H02J 7/00, B60L 53/68, H02J 13/00

(54) **VERFAHREN ZUR ZUORDNUNG EINER ANSCHLUSSINFORMATION UND LADEEINRICHTUNG**
METHOD FOR ASSIGNING CONNECTION INFORMATION AND CHARGING DEVICE
PROCÉDÉ D'ATTRIBUTION DES INFORMATIONS DE CONNEXION ET DISPOSITIF DE CHARGE

(30) Priorität: 04.04.2018 DE 102018205041
(43) Veröffentlichungstag der Anmeldung: 09.10.2019
(73) Patentinhaber: AUDI AG, 85045 Ingolstadt (DE)
(72) Erfinder: Stadler, Michael, 85080 Gaimersheim (DE)

(56) Entgegenhaltungen:
- DE-A1-102010 020 609
- DE-A1-102011 078 047
- DE-A1-102013 204 256
- DE-A1-102015 105 152
- US-A1- 2009 189 456
- US-A1- 2011 202 192
- US-A1- 2014 021 917
- Anyonymous: "Netzanschluss und -integration von Elektromobilität", , 15 July 2017 (2017-07-15), pages 1-14, XP093013060, Retrieved from the Internet: URL:https://www.bdew.de/media/documents/St n_20170615_Netztintegration-Elektromobilit aet.pdf [retrieved on 2023-01-11]

## Beschreibung

Die Erfindung betrifft ein Verfahren zur Zuordnung einer Anschlussinformation für eine Montage einer zum Laden eines elektrischen Energiespeichers ausgebildeten Ladeeinrichtung.

Die Anzahl der teilweise oder voll elektrisch betriebenen Fahrzeuge steigt stetig an. Mit der Anzahl der elektrisch betriebenen Fahrzeuge steigt auch die Anzahl der benötigten Lademöglichkeiten, welche ein Aufladen eines Energiespeichers der Kraftfahrzeuge ermöglichen. Die Zeit, die ein derartiger Aufladevorgang benötigt, hängt, neben der Kapazität des Energiespeichers, auch von der Leistungsfähigkeit der Lademöglichkeit, mithin also von der Energiemenge, welche pro Zeiteinheit von der Lademöglichkeit an den Energiespeicher übertragen werden kann, ab. Bei höheren elektrischen Leistungen ist es von Vorteil, wenn mehrere Phasen eines mehrphasigen Stromnetzes für den Betrieb der Lademöglichkeit verwendet werden. Beim Betrieb von über mehrere Phasen versorgten Lademöglichkeiten ist darauf zu achten, dass eine möglichst symmetrische Auslastung der verwendeten Phasen erfolgt. Aus dem Stand der Technik sind verschiedene Konzepte zum mehrphasigen Betrieb einer Ladeeinrichtung bekannt.

DE 10 2010 024 138 A1 beschreibt eine Vorrichtung zur Netzspannungssymmetrisierung, welche durch eine unsymmetrische Wirkleistungsaufnahme die Belastung dreier Phasen derart verteilt, dass eine Phase mit hoher Spannung mehr belastet wird als eine Phase mit niedriger Spannung.

In DE 10 2012 221 473 A1 wird ein Verfahren zum Laden einer Fahrbatterie eines elektrisch antreibbaren Fahrzeugs mittels einer Ladeeinrichtung offenbart. Die Ladeeinrichtung ist über eine mehrphasige Anschlussleitung elektrisch mit einem Stromnetz und über ein mehrphasiges Kontaktmittel elektrisch mit dem Fahrzeug verbunden. Durch das Schalten einer Schalteinrichtung der Ladeeinrichtung wird die Phase des Kontaktmittels, durch die der größte Strom fließt, elektrisch mit derjenigen Phase der Anschlussleitung verbunden, welche elektrisch am geringsten belastet ist.

In DE 10 2015 101 092 A1 wird ein Ladegerät für ein Plug-In-Fahrzeug beschrieben, welches eine mehrphasige Netzspannung in eine fahrzeugseitige Hochvoltspannung transformiert, wobei jeweils einer von mehreren Leistungskomponenten des Ladegerätes eine Phase der Netzspannung aufgeschaltet ist. Weiterhin umfasst das Ladegerät ein Notlademodul, durch das eine der Leistungskomponenten auf eine andere Phase der Netzspannung umgeschaltet wird, wenn die der anderen Phase aufgeschaltete Leistungskomponente versagt.

US 2014/0021917 A1 betrifft ein Verfahren zur Verteilung elektrischer Leistung, bei dem bei einer Ladeeinrichtung für Energiespeicher von Kraftfahrzeugen eine möglichst gleichmäßige Auslastung der einzelnen Phasen eines mehrphasigen Stromnetzes erreicht werden soll. Dabei sind die drei Phasen des Stromnetzes jeweils mit einer Schaltvorrichtung der Ladeeinrichtung verbunden. Bei Anschließen eines zu ladenden Kraftfahrzeugs an die Ladeeinrichtung wird in Abhängigkeit der aktuellen Auslastung der einzelnen Phasen des Stromnetzes bei einem einphasig zu ladenden Kraftfahrzeug die am wenigsten belastete Phase ausgewählt. Auch kann bei Anschluss eines weiteren Fahrzeugs eine Umschaltung der jeweils zum Laden von mehreren Kraftfahrzeugen verwendeten Phasen erfolgen, wenn dadurch eine möglichst symmetrische Auslastung des Stromnetzes erzielt werden kann.

US 2011/0202192 A1 offenbart einen Aggregationsserver für Fahrzeuge in einem elektrischen Netz. Es werden verschiedene Verfahren, Systeme und Vorrichtungen beschrieben, um den Energiefluss zwischen einem elektrischen Netz und elektrischen Fahrzeugen zu steuern. Dazu kann ein Kraftfahrzeug mit einer Ladestation kommunizieren. Die in der Ladestation gespeicherten Daten, welche die Ladestation charakterisieren, können über eine Verbindung an das Kraftfahrzeug übermittelt werden. Eine Leistungselektronik des Kraftfahrzeugs kann beim Laden des Kraftfahrzeugs ein Phasen-Balancing vornehmen, wobei die kraftfahrzeugseitige Elektronik beziehungsweise die Leistungselektronik von dem Netz mit dreiphasigem Strom versorgt wird und bei einem zweiphasigen Laden des Kraftfahrzeugs die zwei am wenigsten belasteten Phasen zum Laden des Energiespeichers ausgewählt werden. Da der Leistungselektronik drei Phasen netzseitig zur Verfügung gestellt werden, kann das Load-Balancing dynamisch erfolgen, so dass jeweils die Phasenzuordnung beim Laden des Fahrzeugs abhängig der aktuellen Netzauslastung eingestellt werden kann.

In der Veröffentlichung "Netzanschluss und -integration von Elektromobilität" des Bundesverbands der Energie- und Wasserwirtschaft e.V. vom 15. Juni 2017, wird vorgeschlagen, bei mehreren Ladeeinrichtungen niedriger Bemessungsleistung, die an einzelne Phasen angeschlossen werden können, pro Netzanschluss und Phase als Summer der Bemessungsleistungen maximal 4,6 kVA zu erlauben. Dabei soll eine gleichmäßige Verteilung der Ladeleistungen auf die drei Außenleiter gewährleistet werden.

Der Erfindung liegt die Aufgabe zugrunde, eine verbesserte Möglichkeit zur möglichst symmetrischen Auslastung eines Stromnetzes anzugeben.

Zur Lösung dieser Aufgabe ist erfindungsgemäß ein Verfahren mit den Merkmalen des Anspruchs 1 vorgesehen. Vorteilhafte Ausgestaltungen ergeben sich aus den Unteransprüchen.

Das Verfahren umfasst, dass durch eine Recheneinrichtung für jede Ladeeinrichtung einer Mehrzahl von Ladeeinrichtungen jeweils eine Anschlussinformation ermittelt wird, wobei jede Ladeeinrichtung wenigstens einen Phasenanschluss umfasst und die Anschlussinformation für den wenigstens einen Phasenanschluss eine erlaubte Phasenzuordnung aus einer Menge von mehreren erlaubten Phasenzuordnungen angibt, wobei die Phasenzuordnungen eine Zuordnung jeweils einer Phase eines mehrphasigen Stromnetzes an den wenigstens einen Phasenanschluss bei der Montage der Ladeeinrichtung beschreiben und wobei die Anschlussinformationen durch die Recheneinrichtung derart ermittelt werden, dass für wenigstens ein Paar von Ladeeinrichtungen wenigstens eine unterschiedliche Anschlussinformation ermittelt wird.

Der Vorteil des erfindungsgemäßen Verfahrens liegt darin, dass für jede Ladeeinrichtung einer Mehrzahl von Ladeeinrichtungen durch die Anschlussinformation festgelegt wird, an welche Phase oder an welche Phasen der wenigstens eine Phasenanschluss der Ladeeinrichtung angeschlossen wird. Dadurch, dass für wenigstens ein Paar von Ladeeinrichtungen eine unterschiedliche Anschlussinformation ermittelt wird, ergibt sich für das wenigstens eine Paar von Ladeeinrichtungen jeweils eine andere Zuordnung einer oder mehrerer Phasen an den wenigstens einen Phasenanschluss, wodurch eine gleichmäßigere Auslastung der Phasen des Stromnetzes erreicht wird.

Durch das erfindungsgemäße Verfahren zur Zuordnung einer Anschlussinformation kann vorteilhaft auf eine Umschaltvorrichtung der Ladeeinrichtung, welche eine auslastungsabhängige Phasenumschaltung ermöglicht, verzichtet werden. Dies ermöglicht den Einsatz von einfacher zu konstruierenden Ladeeinrichtungen, welche dadurch beispielsweise einfacher und günstiger herzustellen sind. Dadurch lässt sich vorteilhaft die Menge der Ladeeinrichtungen erhöhen, welche montiert werden und deren Ladefunktionen somit zum Laden von elektrischen Energiespeichern, insbesondere zum Laden von Energiespeichern elektrisch angetriebener Fahrzeuge, zur Verfügung stehen.

Eine Anschlussinformation umfasst dabei eine erlaubte Phasenzuordnung aus einer Menge von mehreren erlaubten Phasenzuordnungen, welche jeweils die Zuordnung jeweils einer Phase eines mehrphasigen Stromnetzes an den wenigstens einen Phasenanschluss der Ladeeinrichtung beschreiben. Die Menge von mehreren erlaubten Phasenzuordnungen enthält dabei bevorzugt eine Mehrzahl von verschiedenen Phasenzuordnungen, welche jeweils eine andere Phasenzuordnung der Phasen des Stromnetzes an den wenigstens einen Phasenanschluss beschreiben.

Die Zuordnung der Phasen des mehrphasigen Stromnetzes an den wenigstens einen Phasenanschluss erfolgt dabei derart, dass bevorzugt jedem Phasenanschluss eine einzelne Phase zugeordnet wird. Zusätzlich dazu kann die Ladeeinrichtung selbstverständlich einen Anschluss für einen Neutralleiter und/oder einen Anschluss für einen Schutzleiter umfassen, welche bei einer Montage der Ladeeinrichtung ebenfalls mit einem Neutralleiter und/oder einem Schutzleiter des mehrphasigen Stromnetzes zu verbinden sind.

Die Ladeeinrichtung ist zum Laden eines elektrischen Energiespeichers ausgebildet, wobei die Ladeeinrichtung insbesondere die über den wenigstens einen Phasenanschluss aus dem mehrphasigen Stromnetz aufgenommene elektrische Energie an den Energiespeicher überträgt. Dazu kann beispielsweise vorgesehen sein, dass die Ladeeinrichtung eine Spannungstransformation und/oder eine Gleichrichtung vornimmt. Es ist beispielsweise möglich, dass durch die Ladeeinrichtung ein aus dem mehrphasigen Stromnetz aufgenommener Wechselstrom in einen Gleichstrom umgewandelt wird und/oder dass das Spannungsniveau des aufgenommenen Wechselstromes verändert wird. Alternativ dazu ist es möglich, dass die Ladeeinrichtung keine Gleichrichtung vornimmt, sondern lediglich dazu ausgebildet ist, die über den wenigstens einen Phasenanschluss aufgenommene elektrische Energie beispielsweise an ein zur Energieübertragung an den elektrischen Energiespeicher ausgebildetes Anschlussmittel zu übertragen.

In einer bevorzugten Ausgestaltung der Erfindung ist vorgesehen, dass die Ermittlung der Anschlussinformation derart erfolgt, dass für die Mehrzahl der Ladeeinrichtungen insgesamt eine möglichst gleichmäßige Verteilung der Phasen des Stromnetzes an den Phasenanschlüssen der Ladeeinrichtungen vorgenommen wird. Die Recheneinrichtung kann dazu eine vorgegebene Zuordnungsvorschrift verwenden, welche eine möglichst gleichmäßige, insbesondere eine gleichmäßige, Verteilung der Phasen ermöglicht. Dies bedeutet, dass durch die Zuordnungsvorschrift die einzelnen Phasen in gleicher oder im Wesentlichen gleicher Anzahl den Phasenanschlüssen der Mehrzahl der Ladeeinrichtungen zugeordnet werden. Durch Anschluss jeder Ladeeinrichtung gemäß den Anschlussinformationen kann somit erreicht werden, dass die Phasen des mehrphasigen Stromnetzes möglichst gleich, das heißt in möglichst gleicher Anzahl, den Phasenanschlüssen der Ladeeinrichtungen zugeordnet werden. Bei einer möglichst gleichmäßigen Verteilung der Phasen an die Phasenanschlüsse der Ladeeinrichtungen ergibt sich bei Betrieb aller Ladeeinrichtungen oder eines Teils der Ladeeinrichtungen im statistischen Mittel eine gleichmäßige Auslastung der einzelnen Phasen des Stromnetzes. Das erfindungsgemäße Verfahren ist besonders vorteilhaft, wenn die Anzahl der Phasenanschlüsse einer Ladeeinrichtung von der Anzahl der Phasen des Stromnetzes abweicht.

Zusätzlich oder alternativ dazu kann vorgesehen sein, dass die Ermittlung der Anschlussinformation in Abhängigkeit einer einen Montageort der Ladeeinrichtung beschreibenden Ortsinformation ermittelt wird, wobei die Ermittlung der Anschlussinformation derart erfolgt, dass für einen innerhalb eines Gebietes montierten Teil der Ladeeinrichtungen insgesamt eine möglichst gleichmäßige Verteilung der Phasen des Stromnetzes an den Phasenanschlüssen des Teils der Ladeeinrichtungen vorgenommen wird. Die Gesamtheit der Mehrzahl von Ladeeinrichtungen kann in verschiedene Teile, welche jeweils Ladeeinrichtungen innerhalb eines Gebietes umfassen, aufgeteilt werden. Eine gleichmäßige Zuordnung der Phasen an die Phasenanschlüsse eines gebietsbezogenen Teils der Mehrzahl von Ladeeinrichtungen ermöglicht zusätzlich zu der im Mittel gleichmäßigen Auslastung der gesamten Mehrzahl der Ladeeinrichtungen weiterhin eine möglichst gleichmäßige Auslastung eines gebietsbezogenen Teils der Ladeeinrichtungen. Dazu kann vor oder während der Montage einer Ladeeinrichtung eine Ortsinformation bestimmt werden, welche den Ort der Montage der Ladeeinrichtung beschreibt. Diese Ortsinformation kann an die Recheneinrichtung übermittelt werden, welche daraufhin die Ermittlung der Anschlussinformation in Abhängigkeit dieser Ortsinformation vornimmt. Durch die Recheneinrichtung kann somit sichergestellt werden, dass für einen innerhalb eines Gebietes montierten Teil der Ladeeinrichtungen insgesamt eine möglichst gleichmäßige Verteilung der Phasen des Stromnetzes an die Phasenanschlüsse dieses Teils der Ladeeinrichtungen vorgenommen wird.

Erfindungsgemäß kann vorgesehen sein, dass die Anschlussinformation durch eine zyklische Sequenz ermittelt wird, durch welche jeder Ladeeinrichtung zyklisch eine Phasenzuordnung aus der Mehrzahl von erlaubten Phasenzuordnungen zugeordnet wird. Durch die zyklische Zuordnung der Phasen des Stromnetzes an die Phasenanschlüsse der Ladeeinrichtungen wird eine Gleichverteilung der Phasen vereinfacht. Dies ist insbesondere der Fall, wenn die Mehrzahl von erlaubten Phasenzuordnungen alle möglichen Permutationen, das heißt alle möglichen Zuordnungen einer oder mehrerer Phasen zu dem wenigstens einen Phasenanschluss der Ladeeinrichtung enthält. Durch deren zyklische Zuordnung wird gewährleistet, dass bei der Ermittlung der Anschlussinformation jede Phase nahezu gleich oft bzw. gleich oft den Phasenanschlüssen der Ladeeinrichtungen zugewiesen wird. Abhängig von der Anzahl der Ladeeinrichtungen kann sich die Anzahl der jeweils anzuschließenden Phasen im bevorzugten Fall lediglich jeweils um eins unterscheiden, wodurch im Sinne dieser Erfindung eine gleichmäßige Verteilung der Phasen an die Phasenanschlüsse der Ladeeinrichtungen erreicht wird.

Für die Anschlussinformation kann erfindungsgemäß vorgesehen sein, dass diese von der Recheneinrichtung über eine Kommunikationsverbindung abrufbar ist und/oder dass die Anschlussinformation über eine Kommunikationsverbindung an ein Mobilgerät nach einem Eingang einer Anforderungsinformation übermittelt wird. Die Anforderungsinformation kann dabei von einem Mobilgerät an die Recheneinrichtung übermittelt werden, wobei insbesondere die Übermittlung der Anschlussinformation an das Mobilgerät erfolgt, von welchem die Anforderungsinformation gesendet wurde. Das Mobilgerät kann beispielsweise ein Smartphone oder ein Laptop bzw. ein Computer sein. Es ist auch möglich, dass die Anschlussinformation über eine dafür eingerichtete Webadresse, beispielsweise unter Verwendung eines internetfähigen Mobilgeräts, abgerufen wird. Dies ermöglicht es, dass vor oder während der Montage der Ladeeinrichtung, von einem Monteur eine der jeweiligen Ladeeinrichtung zugeordnete Anschlussinformation abgerufen wird. Die Anschlussinformation kann dazu beispielsweise im Vorfeld für die betreffende Ladeeinrichtung, welche beispielsweise durch Eingabe einer Seriennummer identifizierbar ist, ermittelt und in einer Speichereinrichtung der Recheneinrichtung hinterlegt worden sein. Es ist auch möglich, dass die Ermittlung der Anschlussinformation erst bei Eingang einer Anforderungsinformation ermittelt wird. Es ist möglich, dass die Anforderungsinformation eine Ortsinformation umfasst, welche eine Gleichverteilung der Phasen des Stromnetzes an die Phasenanschlüsse eines Teils der Ladeeinrichtung innerhalb eines Gebietes, sowie es vorangehend erläutert wurde, ermöglicht.

Erfindungsgemäß ist vorgesehen, dass nach einer Montage einer Ladeeinrichtung eine die bei der Montage vorgenommene Phasenzuordnung beschreibende Montageinformation an die Recheneinrichtung übermittelt wird, wonach durch die Recheneinrichtung bei Übereinstimmung der Montageinformation mit der der Ladeeinrichtung zugeordneten Anschlussinformation eine Freischaltinformation an eine Kommunikationseinrichtung der Ladeeinrichtung und/oder ein Mobilgerät übermittelt wird, wobei durch die Freischaltinformation eine Ladefunktion der Ladeeinrichtung freigeschaltet wird oder freischaltbar ist. Auf diese Weise kann eine Kontrolle erfolgen, ob die Ladeeinrichtung entsprechend der in der Anschlussinformation vorgeschriebenen Phasenzuordnung angeschlossen wurde. Bei Übereinstimmung der bei der Montage vorgenommenen Phasenzuordnung mit der bei Ermittlung der Anschlussinformation ermittelten Phasenzuordnung, mithin also bei Übereinstimmung der Montageinformation mit der Anschlussinformation, kann eine Freischaltung der Ladeeinrichtung vorgenommen werden. Durch die Freischaltung der Ladeeinrichtung wird eine bisher gesperrte Ladefunktion aktiviert, das heißt, dass ein Ladevorgang durch die Ladeeinrichtung erst nach erfolgter Freischaltung möglich ist. Die Übermittlung der Montageinformation kann beispielsweise von einem Monteur der Ladeeinrichtung über ein Mobilgerät an die Recheneinrichtung erfolgen, wobei die Montageinformation beispielsweise von dem Monteur über das Mobilgerät als Email oder SMS oder unter Verwendung einer App oder eines Webinterfaces eingebbar ist. Die Recheneinrichtung kann die Freischaltinformation zum Beispiel an das Mobilgerät übermitteln, wobei die Freischaltinformation beispielsweise als ein an der Ladeeinrichtung einzugebender Freischaltcode ausgeführt ist. Es ist auch möglich, dass die Recheneinrichtung die Freischaltinformation an eine Kommunikationseinrichtung der Ladeeinrichtung übermittelt, wobei die Ladeeinrichtung dazu ausgebildet ist, nach Erhalt der Freischaltinformation die Freischaltung ihrer Ladefunktion vorzunehmen.

Zur Freischaltung der Ladeeinrichtung kann erfindungsgemäß vorgesehen sein, dass die Ladeeinrichtung durch eine Deaktivierung einer Sperreinrichtung der Ladeeinrichtung freigeschaltet wird, wobei die Sperreinrichtung im aktivierten Zustand den wenigstens einen Phasenanschluss von wenigstens einem Anschlussmittel der Ladeeinrichtung trennt und/oder wobei durch die Sperreinrichtung im aktivierten Zustand eine Energieabgabe an ein Ladeobjekt, insbesondere durch eine Übermittlung einer die Energieaufnahme unterbindenden Sperrinformation an das Ladeobjekt, verhindert wird. Durch die Sperreinrichtung kann beispielsweise durch einen oder mehrere Schalter eine Trennung der an den wenigstens einen Phasenanschluss angeschlossenen Phase oder Phasen und wenigstens einem Anschlussmittel der Ladeeinrichtung erfolgen. Diese Trennung hat zur Folge, dass die über den wenigstens einen Phasenanschluss aufnehmbare Energie nicht an das Anschlussmittel und somit nicht an den Energiespeicher, welcher über die Ladeeinrichtung geladen werden soll, übertragen werden kann. Es ist auch möglich, dass durch die Sperreinrichtung im aktivierten Zustand eine Energieabgabe an ein Ladeobjekt verhindert wird. Dies kann beispielsweise durch eine Übermittlung einer die Energieaufnahme unterbindenden Sperrinformation an das Ladeobjekt realisiert werden. Die Ladeeinrichtung und das Ladeobjekt können dazu jeweils eine Kommunikationseinrichtung umfassen, zwischen welcher eine Kommunikationsverbindung besteht. Durch Übermittlung einer die Energieaufnahme unterbindenden Sperrinformation von der Ladeeinrichtung an das Ladeobjekt kann eine Energieaufnahme durch das Ladeobjekt, beispielsweise durch eine Deaktivierung einer Ladebuchse des Ladeobjektes, verhindert werden. Bei dem Ladeobjekt kann es sich insbesondere um ein Kraftfahrzeug handeln, welches einen elektrischen Antrieb sowie einen Energiespeicher zur Speicherung der für den Betrieb des elektrischen Antriebs notwendigen elektrischen Energie umfasst.

In einer bevorzugten Ausgestaltung der Erfindung kann vorgesehen sein, dass eine Mehrzahl von Ladeeinrichtungen mit zwei Phasenanschlüssen verwendet wird und/oder dass eine Phasenzuordnung zu jeweils einer von drei Phasen eines dreiphasigen Stromnetzes vorgenommen wird. Das erfindungsgemäße Verfahren ist insbesondere dann vorteilhaft, wenn die Anzahl der Phasenanschlüsse an einer Ladeeinrichtung von der Anzahl der Phasen des Stromnetzes abweicht. Dies kann beispielsweise der Fall sein, wenn die Energieversorgung der Ladeeinrichtungen über ein dreiphasiges Stromnetz erfolgen kann, die Ladeeinrichtungen jeweils aber nur zwei Phasenanschlüsse aufweisen. Durch die erfindungsgemäße Ermittlung der Anschlussinformation kann sichergestellt werden, dass jede der drei Phasen möglichst gleichoft zum Anschluss der Ladeeinrichtungen verwendet wird. Dies ermöglicht es, die Ladeeinrichtungen über jeweils zwei Phasen des dreiphasigen Stromnetzes zu betreiben, ohne dass es dadurch zu einer unsymmetrischen Auslastung des dreiphasigen Stromnetzes kommt, das heißt, ohne dass einzelne Phasen stärker durch die Ladeeinrichtungen belastet werden als die restlichen Phasen des Stromnetzes.

Erfindungsgemäß kann vorgesehen sein, dass eine Mehrzahl von Ladeeinrichtungen umfassend zum Laden eines Energiespeichers eines Elektrofahrzeuges ausgebildete Ladeeinrichtungen, insbesondere Ladesäulen und/oder Wallboxen, verwendet wird. Die Ladeeinrichtungen können beispielsweise als Ladesäulen auf oder neben privaten und öffentlichen Parkplätzen aufgestellt werden, damit auf dem Parkplatz geparkte Elektrofahrzeuge während des Parkens geladen werden können. Es ist auch möglich, dass die Ladeeinrichtungen als Wallboxen ausgeführt sind, die in Garagen zum Laden eines in der Garage geparkten Kraftfahrzeuges montiert werden können. Es ist insbesondere möglich, dass die Mehrzahl von Ladeeinrichtungen sowohl als Ladesäulen als auch als Wallboxen ausgeführte Ladeeinrichtungen umfasst.

Es ist eine Ladeeinrichtung denkbar, für die vorgesehen ist, dass sie zur Durchführung eines Verfahrens nach einem der Ansprüche 6 oder 7 eingerichtet ist. Die Ladeeinrichtung umfasst eine zur Freischaltung der Ladefunktion ausgebildete Freischalteinrichtung und/oder eine Sperreinrichtung, wobei die Sperreinrichtung im aktivierten Zustand den wenigstens einen Phasenanschluss von wenigstens einem Anschlussmittel der Ladeeinrichtung trennt und/oder wobei die Sperreinrichtung im aktivierten Zustand eine Energieabgabe an ein Ladeobjekt, insbesondere durch eine Übermittlung einer die Energieaufnahme unterbindenden Sperrinformation an das Ladeobjekt, verhindert. Die Sperreinrichtung kann dabei Teil der Freischalteinrichtung sein. Weiterhin kann die Freischalteinrichtung eine Kommunikationseinrichtung umfassen oder mit einer Kommunikationseinrichtung der Ladeeinrichtung verbunden sein, wobei über die Kommunikationseinrichtung der Ladeeinrichtung eine Kommunikationsverbindung zu einer Kommunikationseinrichtung des Ladeobjektes erstellbar ist. Die Ladeeinrichtung kann insbesondere als Ladesäule oder als Wallbox ausgeführt sein und zur Energieabgabe an einen Energiespeicher eines Kraftfahrzeuges mit elektrischem Antrieb ausgebildet sein. Die Freischalteinrichtung kann derart ausgeführt sein, dass sie beispielsweise durch die Eingabe eines Freischaltcodes an einer Benutzerschnittstelle der Ladeeinrichtung freischaltbar ist und/oder dass die Freischalteinrichtung durch Übermittlung einer Freischaltinformation von einer externen Recheneinrichtung an eine Kommunikationseinrichtung der Ladeeinrichtung freischaltbar ist.

Weitere Vorteile und Ausgestaltungen ergeben sich aus den Ausführungsbeispielen sowie anhand der Zeichnungen. Dabei zeigen:
- Fig. 1: eine schematische Darstellung einer Ladeeinrichtung,
- Fig. 2: eine schematische Darstellung einer Mehrzahl von Ladeeinrichtungen, sowie
- Fig. 3: ein Flussdiagramm eines Ausführungsbeispiels eines erfindungsgemäßen Verfahrens.

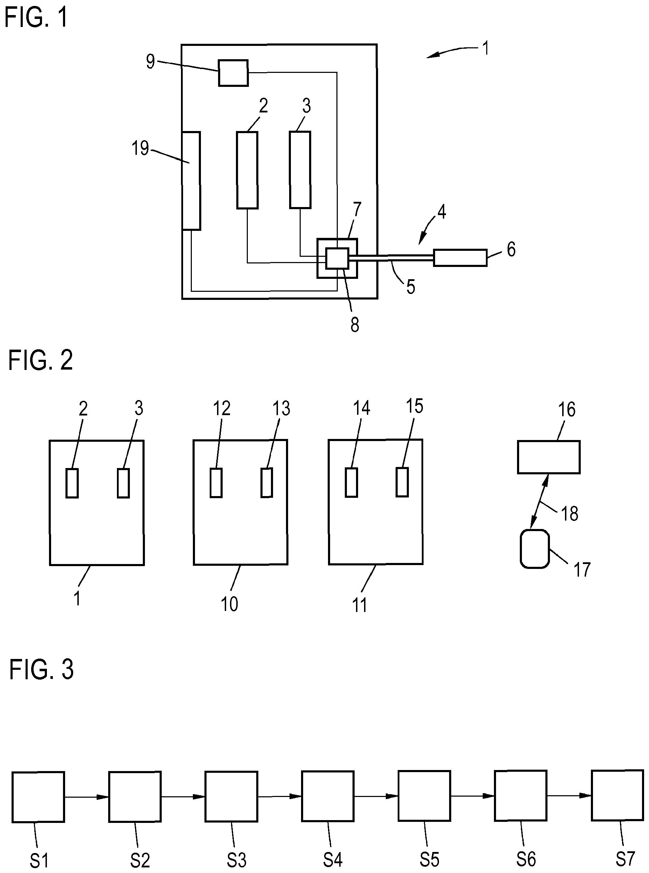

In Fig. 1 ist eine schematische Darstellung einer Ladeeinrichtung 1 gezeigt. Die Ladeeinrichtung 1 umfasst zwei Phasenanschlüsse 2, 3, an welche jeweils eine Phase eines mehrphasigen Stromnetzes anschließbar ist. Die bei angeschlossenen Phasen über die Phasenanschlüsse 2, 3 aufgenommene elektrische Energie kann zum Laden eines Kraftfahrzeuges über ein Anschlussmittel 4, welches ein Kabel 5 sowie einen Stecker 6 umfasst, an das Kraftfahrzeug übertragen werden, wenn dieses über den Stecker 6 mit der Ladeeinrichtung 1 verbunden ist.

Die Ladeeinrichtung 1 umfasst weiterhin eine Freischalteinrichtung 7, welche zum Freischalten einer Ladefunktion der Ladeeinrichtung 1 ausgebildet ist. Die Freischalteinrichtung 1 umfasst dazu eine Sperreinrichtung 8, durch welche beispielsweise ein elektrischer Kontakt zwischen den Phasenanschlüssen 2, 3 und dem Anschlussmittel 4 im aktiven Zustand der Sperreinrichtung 8 unterbrochen wird. Zusätzlich oder alternativ dazu, kann die Freischalteinrichtung 7 eine Kommunikationsmodul (hier nicht dargestellt) umfassen, über welches eine Kommunikationsverbindung zwischen der Freischalteinrichtung 8 und einem an dem Anschlussmittel 4 angeschlossenen Kraftfahrzeug bestehen kann. Dabei kann eine Energieabgabe an das Kraftfahrzeug durch eine Übermittlung einer die Energieaufnahme durch das Kraftfahrzeug unterbindenden Sperrinformation über die Kommunikationsverbindung verhindert werden. Die Kommunikationsverbindung zwischen der Freischalteinrichtung 8 und dem Kraftfahrzeug kann beispielsweise drahtlos oder über das Anschlussmittel 4 erfolgen.

Eine Freischaltung der Ladeeinrichtung 1 kann mittels einer Freischaltinformation erfolgen, welche an die mit der Freischalteinrichtung 7 verbundene Kommunikationseinrichtung 9 der Ladeeinrichtung 1 übermittelt wird. Zusätzlich oder alternativ dazu kann die Ladeeinrichtung 1 eine Benutzerschnittstelle 19 umfassen, über die eine Freischaltinformation, beispielsweise in Form eines Freischaltcodes, eingebbar ist, wobei beim Eingeben des zu der Ladeeinrichtung 1 gehörigen Freischaltcodes die Freischalteinrichtung 7 eine Energieübertragung von der Ladeeinrichtung 1 freischaltet. Dies kann beispielsweise dadurch geschehen, dass die Freischalteinrichtung 7 die Sperreinrichtung 8 deaktiviert und somit eine elektrische Verbindung zwischen den Phasenanschlüssen 2, 3 und dem Stecker 6 des Anschlussmittels 4 erfolgt.

In Fig. 2 ist eine schematische Darstellung einer Mehrzahl von Ladeeinrichtungen 1, 10, 11 dargestellt. Die Ladeeinrichtung 10 umfasst dabei zwei Phasenanschlüsse 12 und 13 und die Ladeeinrichtung 11 entsprechend die Phasenanschlüsse 14 und 15. Durch eine Recheneinrichtung 16 erfolgt die Ermittlung einer Anschlussinformation für jede der Ladeeinrichtungen 1, 10, 11, wobei die Anschlussinformation eine Phasenzuordnung für die jeweiligen Phasenanschlüsse der Ladeeinrichtungen 1, 10, 11 angibt. Die von der Anschlussinformation angegebene, jeweilige Phasenzuordnung wird von der Recheneinrichtung 16 aus einer Menge von mehreren erlaubten Phasenzuordnungen ermittelt. Dabei kann die Anschlussinformation für jede der Ladeeinrichtungen 1, 10, 11 durch eine zyklische Sequenz ermittelt werden, wobei jeder Ladeeinrichtung 1, 10, 11 zyklisch eine Phasenzuordnung aus der Mehrzahl von erlaubten Phasenzuordnungen zugeordnet wird. Die Menge der erlaubten Phasenzuordnungen kann dabei insbesondere alle Permutationen von Phasenzuordnungen an die jeweiligen Phasenanschlüsse 2, 3, 12 - 15 enthalten.

Bei einem Anschluss der Ladeeinrichtungen 1, 10, 11 an ein dreiphasiges Stromnetz kann dabei beispielsweise dem Phasenanschluss 2 die erste Phase und dem Phasenanschluss 3 die zweite Phase zugeordnet werden. Weiterhin können dem Phasenanschluss 12 die dritte Phase und dem Phasenanschluss 13 die erste Phase zugeordnet werden. Entsprechend erfolgt für die Ladeeinrichtung 11 eine Zuordnung des Phasenanschlusses 14 an die zweite Phase sowie eine Zuordnung des Phasenanschlusses 15 an die dritte Phase. Jede der möglichen Permutationen der Zuordnung der Phasen des Stromnetzes an die Ladeeinrichtungen 1, 10, 11 ist somit abgedeckt.

Durch die Bereitstellung der jeweiligen Anschlussinformation für die Ladeeinrichtungen 1, 10, 11 durch die Recheneinrichtung 16 wird erreicht, dass eine gleichmäßige Verteilung der drei Phasen des dreiphasigen Stromnetzes an die Phasenanschlüsse 2, 3, 12 bis 15 erreicht wird. Bei Betrieb einer Mehrzahl von Ladeeinrichtungen 1, 10, 11 ergibt sich somit im statistischen Mittel eine gleichmäßige Auslastung der Phasen des Stromnetzes. Aufgrund der zyklischen Sequenz würden einer vierten Ladeeinrichtung wieder die erste Phase und die zweite Phase, einer fünften Ladeeinrichtung wieder die dritte Phasen und die erste Phase und einer sechsten Ladeeinrichtung wieder die zweite Phase und die dritte Phase zugeordnet werden. Entsprechendes gilt ebenfalls für weitere Ladeeinrichtungen.

Die jeweils für eine der Ladeeinrichtungen 1, 10, 11 ermittelte Anschlussinformation kann beispielsweise mittels eines Mobilgerätes 17, welches über ein Kommunikationsverbindung 18 mit der Recheneinrichtung 16 verbunden ist, abgerufen werden. Dies kann beispielsweise über eine E-Mail, über eine App und/oder über ein Webinterface erfolgen. Von dem Mobilgerät 17 kann eine Anforderungsinformation bezüglich einer oder mehrerer der Ladeeinrichtungen 1, 10, 11 an die Recheneinrichtung 16 übermittelt werden. Anschließend übermittelt die Recheneinrichtung 16 die für jede der Ladeeinrichtungen 1, 10, 11 ermittelten Anschlussinformationen, welche die Phasenzuordnung der jeweiligen Phasenanschlüsse 2, 3, 12 bis 15 umfassen. Anhand dieser Anschlussinformation kann beim Montieren der Ladeeinrichtungen 1, 10, 11 die jeweilige Zuordnung der Phasenanschlüsse an die einzelnen Phasen des Stromnetzes vorgenommen werden. Selbstverständlich kann neben den jeweiligen Phasen des Stromnetzes auch an jeder der Ladeeinrichtungen 1, 10, 11 ein Anschluss eines Neutralleiters und/oder eines Schutzleiters erfolgen. Weiterhin ist es selbstverständlich möglich, dass die Ladeeinrichtungen jeweils nur einen Phasenanschluss umfassen oder dass die Ladeeinrichtungen jeweils mehr als zwei Phasenanschlüsse umfassen. Weiterhin kann die Phasenzuordnung der Phasenanschlüsse der Ladeeinrichtungen 1, 10, 11, auch an die Phasen eines Stromnetzes erfolgen, welches mehr oder weniger als drei Phasen umfasst.

In Fig. 3 ist ein weiteres Ausführungsbeispiel eines erfindungsgemäßen Verfahrens als Flussdiagramm dargestellt. Das erfindungsgemäße Verfahren kann beispielsweise vor oder während der Montage einer Ladeeinrichtung erfolgen und dient dazu, für eine oder mehrere zu montierende Ladeeinrichtungen jeweils eine Phasenzuordnung zu ermitteln. In Schritt S1 erfolgt die Übermittlung einer Anforderungsinformation an die Recheneinrichtung 16. Die Anforderungsinformation kann beispielsweise über ein Mobilgerät 17 an die Recheneinrichtung 16 übermittelt werden. Es ist möglich, aber nicht notwendig, dass die Anforderungsinformation eine der jeweiligen Ladeeinrichtungen zugeordnete Kennung, beispielsweise eine Seriennummer oder Ähnliches, umfasst.

In Schritt S2 erfolgt die Ermittlung einer Anschlussinformation für die zu montierende Ladeeinrichtung.

Die Anforderungsinformation kann dabei eine Ortsinformation umfassen, welche die Position beschreibt, an der die Ladeeinrichtung montiert werden soll.

In Schritt S2 erfolgt die Ermittlung einer Anschlussinformation für die zu montierende Ladeeinrichtung. Dabei kann in einer Ausgestaltung des erfindungsgemäßen Verfahrens die Ortsinformation bei der Erstellung berücksichtigt werden. Die Anschlussinformation kann durch die Recheneinrichtung 16 durch eine zyklische Sequenz ermittelt werden, welcher jeder zu montierenden Ladeeinrichtung zyklisch eine Phasenzuordnung aus der Mehrzahl aus erlaubten Phasenzuordnungen zuordnet. Die Mehrzahl von erlaubten Phasenzuordnungen ist dabei in der Recheneinrichtung 16 hinterlegt. Gegebenenfalls kann die ebenfalls übermittelte Ortsinformation berücksichtigt werden, so dass sich bereits für einen Teil der Mehrzahl der Ladeeinrichtungen innerhalb eines bestimmten Gebietes eine gleichmäßige Verteilung der Phasen auf die Phasenanschlüsse der zu montierenden Ladeeinrichtungen ergibt. Dies kann beispielsweise dadurch erreicht werden, dass für mehrere festgelegte Gebiete die zyklische Sequenz jeweils unabhängig angewendet wird. Die zyklische Sequenz und/oder die aktuelle Position in der Sequenz für jedes Gebiet kann dazu in der externen Recheneinrichtung hinterlegt sein. In Schritt S3 erfolgt die Übermittlung der Anschlussinformation an das Mobilgerät 17. Anschließend erfolgt in Schritt S4 die Montage der Ladeeinrichtung bzw. der Anschluss der Phasen gemäß der in Schritt S3 übermittelten Anschlussinformation.

Nach Abschluss der Montage kann in Schritt S5 eine Montageinformation an die externe Recheneinrichtung übermittelt werden, welche die im Zuge der Montage vorgenommene Phasenzuordnung an die Phasenanschlüsse der montierten Ladeeinrichtung beschreibt. Die Montageinformation kann dazu von einem Monteur der Ladeeinrichtung über ein Mobilgerät, beispielsweise unter Verwendung von Email, SMS, einer App oder einem Webinterface, an die externe Recheneinrichtung übermittelt werden. Die Recheneinrichtung kann in Schritt S6 einen Vergleich zwischen der übermittelten Montageinformation und der der Ladeeinrichtung zugeordneten Anschlussinformation vornehmen. Dazu kann beispielsweise vorgesehen sein, dass die in Schritt S1 übermittelte Anforderungsinformation und die in Schritt S5 übermittelte Montageinformation jeweils eine Kennung der Ladeeinrichtung, beispielsweise eine Seriennummer, umfassen, wobei die in Schritt S2 übermittelte Anschlussinformation mit der entsprechenden Kennung in der Recheneinrichtung 16 gespeichert wird, so dass ein Abgleich der in Schritt S5 übermittelten Montageinformation der in der Recheneinrichtung gespeicherten Anschlussinformation für die Ladeeinrichtung mit der dort hinterlegten Kennung erfolgen kann.

In Schritt S6 erfolgt die Übermittlung einer Freischaltinformation an das Mobilgerät 17 und/oder an die Kommunikationseinrichtung 9 der freizuschaltenden Ladeeinrichtung. Eine an die Mobileinrichtung 17 übermittelte Freischaltinformation kann beispielsweise einen der jeweiligen Ladeeinrichtung über ihre Kennung zugeordneten Freischaltcode umfassen, welcher über die Benutzerschnittstelle 19 eingegeben werden kann und über welchen, wie bereits in Bezug zu Fig. 1 beschrieben wurde, die Freischaltung der Ladeeinrichtung 1 erfolgt. Zusätzlich oder alternativ dazu kann eine Freischaltung der Ladeeinrichtung 1 auch dadurch erfolgen, dass die Freischaltinformation an eine Kommunikationseinrichtung 9 der Ladeeinrichtung 1 übermittelt wird, wobei durch den Empfang der Freischaltinformation durch die Ladeeinrichtung 1 ebenfalls eine Freischaltung der Ladeeinrichtung 1 erfolgt.

## Patentansprüche

1. Verfahren zur Zuordnung einer Anschlussinformation für eine Montage einer zum Laden eines elektrischen Energiespeichers ausgebildeten Ladeeinrichtung (1), wobei durch eine Recheneinrichtung (16) für jede Ladeeinrichtung (1, 10, 11) einer Mehrzahl von Ladeeinrichtungen (1, 10, 11) jeweils eine Anschlussinformation ermittelt wird, wobei jede Ladeeinrichtung (1, 10, 11) wenigstens einen Phasenanschluss (2, 3, 12 - 15) umfasst und die Anschlussinformation für den wenigstens einen Phasenanschluss (2, 3, 12 - 15) eine erlaubte Phasenzuordnung aus einer Menge von mehreren erlaubten Phasenzuordnungen angibt, wobei die Phasenzuordnungen eine Zuordnung jeweils einer Phase eines mehrphasigen Stromnetzes an den wenigstens einen Phasenanschluss (2, 3, 12 - 15) bei der Montage der Ladeeinrichtung (1) beschreiben und wobei die Anschlussinformationen durch die Recheneinrichtung (16) derart ermittelt werden, dass für wenigstens ein Paar von Ladeeinrichtungen (1, 10, 11) jeweils eine unterschiedliche Anschlussinformation ermittelt wird, **dadurch gekennzeichnet, dass** nach einer Montage einer Ladeeinrichtung (1, 10, 11) eine die bei der Montage vorgenommene Phasenzuordnung beschreibende Montageinformation an die Recheneinrichtung (16) übermittelt wird, wonach durch die Recheneinrichtung (16) bei Übereinstimmung der Montageinformation mit der der Ladeeinrichtung (1, 10, 11) zugeordneten Anschlussinformation eine Freischaltinformation an eine Kommunikationseinrichtung (9) der Ladeeinrichtung (1, 10, 11) und/oder an ein Mobilgerät (17) übermittelt wird, wobei durch die Freischaltinformation eine Ladefunktion der Ladeeinrichtung (1, 10, 11) freigeschaltet wird oder freischaltbar ist.

2. Verfahren nach Anspruch 1,
**dadurch gekennzeichnet,**
**dass** die Ermittlung der Anschlussinformation derart erfolgt, dass für die Mehrzahl der Ladeeinrichtungen (1, 10, 11) insgesamt eine möglichst gleichmäßige Verteilung der Phasen des Stromnetzes an den Phasenanschlüssen (2, 3, 12 - 15) der Ladeeinrichtungen (1, 10, 11) vorgenommen wird.

3. Verfahren nach Anspruch 1 oder 2,
**dadurch gekennzeichnet,**
**dass** die Ermittlung der Anschlussinformation in Abhängigkeit einer einen Montageort der Ladeeinrichtung (1, 10, 11) beschreibenden Ortsinformation ermittelt wird, wobei die Ermittlung der Anschlussinformation derart erfolgt, dass für einen innerhalb eines Gebiets montierten Teil der Ladeeinrichtungen (1, 10, 11) insgesamt eine möglichst gleichmäßige Verteilung der Phasen des Stromnetzes an den Phasenanschlüssen (2, 3, 12 - 15) des Teils der Ladeeinrichtungen (1, 10, 11) vorgenommen wird.

4. Verfahren nach einem der vorangehenden Ansprüche,
**dadurch gekennzeichnet,**
**dass** die Anschlussinformation durch eine zyklische Sequenz ermittelt wird, durch welche jeder Ladeeinrichtung (1, 10, 11) zyklisch eine Phasenzuordnung aus der Mehrzahl von erlaubten Phasenzuordnungen zugeordnet wird.

5. Verfahren nach einem der vorangehenden Ansprüche,
**dadurch gekennzeichnet,**
**dass** die Anschlussinformation von der Recheneinrichtung (16) über eine Kommunikationsverbindung (18) abrufbar ist und/oder dass die Anschlussinformation über eine Kommunikationsverbindung (18) an ein Mobilgerät (17) nach einem Eingang einer Anforderungsinformation übermittelt wird.

6. Verfahren nach einem der vorangehenden Ansprüche,
**dadurch gekennzeichnet,**
**dass** die Ladeeinrichtung (1, 10, 11) durch eine Deaktivierung einer Sperreinrichtung (8) der Ladeeinrichtung freigeschaltet wird, wobei die Sperreinrichtung (8) im aktivierten Zustand den wenigstens einen Phasenanschluss (2, 3, 12 - 15) von wenigstens einem Anschlussmittel (4) der Ladeeinrichtung (1, 10, 11) trennt und/oder wobei durch die Sperreinrichtung (8) im aktivierten Zustand eine Energieabgabe an ein Ladeobjekt, insbesondere durch eine Übermittlung einer die Energieaufnahme unterbindenden Sperrinformation an das Ladeobjekt, verhindert wird.

7. Verfahren nach einem der vorangehenden Ansprüche,
**dadurch gekennzeichnet,**
**dass** eine Mehrzahl von Ladeeinrichtungen (1, 10, 11) mit zwei Phasenanschlüssen (2, 3, 12 - 15) verwendet wird und/oder dass eine Phasenzuordnung zu jeweils einer von drei Phasen eines dreiphasigen Stromnetzes vorgenommen wird.

8. Verfahren nach einem der vorangehenden Ansprüche,
**dadurch gekennzeichnet,**
**dass** eine Mehrzahl von Ladeeinrichtungen (1, 10, 11) umfassend zum Laden eines Energiespeicher eines Elektrofahrzeugs ausgebildete Ladeeinrichtungen (1, 10, 11), insbesondere Ladesäulen und/oder Wallboxen, verwendet wird.

## Claims

1. Method for assigning connection information for an assembly of a charging apparatus (1) designed for charging an electrical energy store, wherein connection information is determined by a computing apparatus (16) for each charging apparatus (1, 10, 11) of a plurality of charging apparatuses (1, 10, 11), wherein each charging apparatus (1, 10, 11) comprises at least one phase connection (2, 3, 12-15) and the connection information for the at least one phase connection (2, 3, 12-15) specifies a permitted phase assignment from a set of a plurality of permitted phase assignments, wherein the phase assignments describe an assignment in each case of a phase of a multiphase power network to the at least one phase connection (2, 3, 12-15) during the assembly of the charging apparatus (1), and wherein the connection information is determined by the computing apparatus (16) in such a way that different connection information is determined in each case for at least one pair of charging apparatuses (1, 10, 11),
**characterised in that**
after a charging apparatus (1, 10, 11) has been assembled, assembly information describing the phase assignment made during the assembly is transmitted to the computing apparatus (16), whereupon, if the assembly information matches the connection information assigned to the charging apparatus (1, 10, 11), the computing apparatus (16) transmits enabling information to a communication apparatus (9) of the charging apparatus (1, 10, 11) and/or to a mobile device (17), wherein a charging function of the charging apparatus (1, 10, 11) is enabled or can be enabled by the enabling information.

2. Method according to claim 1,
**characterised in that**
the connection information is determined in such a way that, for the plurality of charging apparatuses (1, 10, 11) as a whole, the phases of the power network are distributed as uniformly as possible at the phase connections (2, 3, 12-15) of the charging apparatuses (1, 10, 11).

3. Method according to claim 1 or 2,
**characterised in that**
the connection information is determined depending on location information describing an assembly location of the charging apparatus (1, 10, 11), wherein the connection information is determined in such a way that, for a portion of the charging apparatuses (1, 10, 11) assembled within an area, the phases of the power network are distributed as uniformly as possible overall at the phase connections (2, 3, 12-15) of the portion of the charging apparatuses (1, 10, 11).

4. Method according to any of the preceding claims,
**characterised in that**
the connection information is determined by a cyclic sequence by which each charging apparatus (1, 10, 11) is cyclically assigned a phase assignment from the plurality of permitted phase assignments.

5. Method according to any of the preceding claims,
**characterised in that**
the connection information can be retrieved by the computing apparatus (16) via a communication link (18) and/or the connection information is transmitted via a communication link (18) to a mobile device (17) after receipt of an item of request information.

6. Method according to any of the preceding claims,
**characterised in that**
the charging apparatus (1, 10, 11) is enabled by deactivating a blocking apparatus (8) of the charging apparatus, wherein the blocking apparatus (8), in the activated state, separates the at least one phase connection (2, 3, 12-15) from at least one connection means (4) of the charging apparatus (1, 10, 11) and/or wherein, in the activated state, the blocking apparatus (8) prevents an energy output to a charging object, in particular by transmitting to the charging object blocking information which prevents energy input.

7. Method according to any of the preceding claims,
**characterised in that**
a plurality of charging apparatuses (1, 10, 11) with two phase connections (2, 3, 12-15) are used and/or **in that** a phase assignment is made to one of three phases of a threephase power network in each case.

8. Method according to any of the preceding claims,
**characterised in that**
a plurality of charging apparatuses (1, 10, 11) comprising charging apparatuses (1, 10, 11) designed for charging an energy store of an electric vehicle, in particular charging columns and/or wall boxes, is used.

## Revendications

1. Procédé d'attribution d'informations de connexion pour un montage d'un dispositif de charge (1) configuré pour la charge d'un dispositif de stockage d'énergie électrique, dans lequel respectivement une information de connexion est déterminée par un appareil de calcul (16) pour chaque dispositif de charge (1, 10, 11) d'une pluralité de dispositifs de charge (1, 10, 11), dans lequel chaque dispositif de charge (1, 10, 11) comprend au moins une connexion de phase (2, 3, 12-15) et l'information de connexion pour l'au moins une connexion de phase (2, 3, 12-15) indique une attribution de phase autorisée à partir d'une quantité de plusieurs attributions de phase autorisées, dans lequel les attributions de phase décrivent une attribution respectivement d'une phase d'un réseau électrique polyphasé sur l'au moins une connexion de phase (2, 3, 12-15) lors du montage du dispositif de charge (1) et dans lequel les informations de connexion sont déterminées par l'appareil de calcul (16) de telle manière que respectivement une information de connexion différente soit déterminée pour au moins une paire de dispositifs de charge (1, 10, 11),
**caractérisé en ce que**
après un montage d'un dispositif de charge (1, 10, 11), une information de montage décrivant l'attribution de phase entreprise lors du montage est transmise à l'appareil de calcul (16), après quoi une information d'activation est transmise à un appareil de communication (9) du dispositif de charge (1, 10, 11) et/ou à un appareil mobile (17) par l'appareil de calcul (16) en cas de concordance de l'information de montage avec l'information de connexion attribuée au dispositif de charge (1, 10, 11), dans lequel une fonction de charge du dispositif de charge (1, 10, 11) est activée ou peut être activée par l'information d'activation.

2. Procédé selon la revendication 1,
**caractérisé en ce que**
la détermination de l'information de connexion est effectuée de telle manière que pour la pluralité de dispositifs de charge (1, 10, 11), dans l'ensemble une répartition la plus uniforme possible des phases du réseau électrique soit entreprise au niveau des connexions de phase (2, 3, 12-15) des dispositifs de charge (1, 10, 11).

3. Procédé selon la revendication 1 ou 2,
**caractérisé en ce que**
la détermination de l'information de connexion est déterminée en fonction d'une information d'emplacement décrivant un emplacement de montage du dispositif de charge (1, 10, 11), dans lequel la détermination de l'information de connexion est effectuée de telle manière que pour une partie montée au sein d'une zone des dispositifs de charge (1, 10, 11), dans l'ensemble une répartition la plus uniforme possible des phases du réseau électrique soit entreprise au niveau des connexions de phase (2, 3, 12-15) de la partie des dispositifs de charge (1, 10, 11).

4. Procédé selon l'une quelconque des revendications précédentes,
**caractérisé en ce que**
l'information de connexion est déterminée par une séquence cyclique, par laquelle une attribution de phase à partir de la pluralité d'attributions de phase autorisées est attribuée de manière cyclique à chaque dispositif de charge (1, 10, 11).

5. Procédé selon l'une quelconque des revendications précédentes,
**caractérisé en ce que**
l'information de connexion peut être consultée par l'appareil de calcul (16) par le biais d'une liaison de communication (18) et/ou **en ce que** l'information de connexion est transmise par le biais d'une liaison de communication (18) à un appareil mobile (17) après une entrée d'une information de requête.

6. Procédé selon l'une quelconque des revendications précédentes,
**caractérisé en ce que**
le dispositif de charge (1, 10, 11) est activé par une désactivation d'un appareil de verrouillage (8) du dispositif de charge, dans lequel l'appareil de verrouillage (8) sépare dans l'état activé l'au moins une connexion de phase (2, 3, 12-15) d'au moins un moyen de connexion (4) du dispositif de charge (1, 10, 11) et/ou **en ce que** dans lequel une fourniture d'énergie à un objet de charge est empêchée par l'appareil de verrouillage (8) dans l'état activé, en particulier par une transmission à l'objet de charge d'une information de verrouillage empêchant l'apport énergétique.

7. Procédé selon l'une quelconque des revendications précédentes,
**caractérisé en ce que**
une pluralité de dispositifs de charge (1, 10, 11) est utilisée avec deux connexions de phase (2, 3, 12-15) et/ou **en ce qu'**une attribution de phase à respectivement une des trois phases d'un réseau électrique triphasé est entreprise.

8. Procédé selon l'une quelconque des revendications précédentes,
**caractérisé en ce que**
une pluralité de dispositifs de charge (1, 10, 11) comprenant des dispositifs de charge (1, 10, 11) configurés pour la charge d'un dispositif de stockage d'énergie d'un véhicule électrique, en particulier des bornes de recharge et/ou des boîtiers muraux, est utilisée.
